# EUROPEAN PATENT APPLICATION

(11) **EP 3 974 158 A1**
(43) Date of publication of application: **30.03.2022**
(21) Application number: 20198628.8
(22) Date of filing: 28.09.2020
(51) Int. Cl.: B29C 64/118, B33Y 70/00, B33Y 80/00, C08F 210/02, C08F 216/38

(54) **USE OF ETHYLENE VINYL ACETALS IN ADDITIVE MANUFACTURING PROCESSES**

(71) Applicant: Kuraray Europe GmbH, 65795 Hattersheim (DE)
(72) Inventor: Frank, Michael, 55268 Nieder-Olm (DE)
(74) Representative: Janßen, Christian Oliver

(57) **Abstract**

The invention is directed to the use of ethylene vinyl acetals in additive manufacturing processes, especially for 3D printing process.

## Description

The invention is directed to the use of ethylene vinyl acetals in additive manufacturing processes, especially for 3D printing processes.

Additive manufacturing is the technology to build three-dimensional objects by adding layer-upon-layer of material as opposed to producing the objects by taking material away, e.g. by carving or sculpturing. One example of an additive manufacturing process, which is gaining more and more importance in production of plastic parts, is the 3D printing process.

The use of polyvinyl butyrate (PVB) for 3D printing is known in the art. While the use of PVB for 3D printing has various advantages over the use of other materials, there are also certain drawbacks. For example, PVB has a rather high processing temperature in additive manufacturing processes like 3D printing, in which the material has to melt in the nozzle of the 3D printer. These high temperatures can lead to a substantive degradation of the material. Thus, there is still a need for improved materials for additive manufacturing technologies.

Therefore, one objective of the invention is to provide a process for the manufacture of a three-dimensional object with an improved material, e.g. using a material with improved production costs or raw material costs and/or an improved environmental footprint. Another objective of the present invention is to provide a process using a material with improved characteristics like an improved thermal three-dimensional stability, improved thermal stability, improved melting point, improved viscosity at the temperature of manufacturing the three-dimensional object, improved water uptake profile, improved better compatibility with other components of the printing material, e.g. pigments or dyes, less warping and/or improved post-processibility, especially improved polishing characteristics.

These and other objectives are surprisingly solved by the present invention.

The present invention provides a process for the additive manufacturing of a three-dimensional object wherein the three-dimensional object comprises, consists of or consists essentially of an ethylene vinyl acetal.

The term "additive manufacturing" as used herein shall mean the technology to build three-dimensional objects by adding layer-upon-layer of material. Additive manufacturing comprises different techniques, including but not limited to 3D printing, rapid prototyping, direct digital manufacturing, layered manufacturing, additive fabrication and selective laser sintering. Preferably, the additive manufacturing is 3D printing.

The term "consisting essentially of" shall mean that no other component is present that materially affects the characteristics of the material.

The ethylene vinyl acetal of the present invention can be obtained by subjecting an aldehyde to an acetalization reaction with an ethylene vinyl alcohol (EVOH). Such ethylene vinyl alcohols are known in the art and can be obtained by copolymerizing ethylene in the presence of an acidic catalyst. Furthermore, ethylene vinyl alcohols are commercially available.

Preferably, the ethylene vinyl alcohol is obtained by copolymerizing ethylene and a vinyl acetate and hydrolysing the obtained copolymer. In the hydrolysation reaction, a conventionally known alkali catalyst or an acid catalyst can be used and among them, a hydrolysation reaction using methanol as a solvent and caustic soda (NaOH) catalyst is convenient.

Preferably, the percentage of ethylene units in the ethylene vinyl alcohol is 25 to 60 mol%, more preferably 30 to 55 mol%, and still more preferably 35 to 50 mol%.

Although there is no particular limitation on the degree of saponification of the acetate groups, it is preferably 95 mol% or more, more preferably 98 mol% or more, still more preferably 99 mol% or more, and most preferably 99.9 mol% or more.

Preferably, the percentage of ethylene units in the ethylene vinyl acetal is 25 to 60 mol%, more preferably 30 to 55 mol%, and still more preferably 35 to 50 mol%.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde or n-butyraldehyde.

Also preferably, the ethylene vinyl acetals used in the inventive process are mixed acetals, i.e. they comprise at least two different acetal groups. In other words, the ethylene vinyl acetals as used in the invention comprise a first acetal group derived from the reaction of two hydroxyl groups of the respective ethylene vinyl alcohol with one aldehyde and at least a second acetal group derived from the reaction of two other hydroxyl groups of the respective ethylene vinyl alcohol with a second aldehyde, wherein the first aldehyde is different from the second aldehyde. The preferred aldehydes are the same as used for the acetals with one acetal group as listed above.

Although there is no particular limitation to the method for producing the ethylene vinyl acetals used in this embodiment of the present invention, they can be produced by a method in which an aldehyde is added to an ethylene vinyl alcohol solution under acidic conditions and subjected to an acetalization reaction.

The reaction product obtained after the acetalization reaction is neutralized with alkali, and then washed with water to obtain the ethylene vinyl acetal.

The catalyst for carrying out the acetalization reaction is not particularly limited, and any organic acid or inorganic acid may be used. Examples thereof include acetic acid, para toluenesulfonic acid, nitric acid, sulfuric acid, hydrochloric acid, carbonic acid, and the like.

Preferably, the degree of acetalization of the ethylene vinyl acetal used in the present invention is from 1 mol% to 80 mol%, more preferably 5 mol% or more and less than 40 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 38 mol% or less, 36 mol% or less, 34 mol% or less, and 32 mol% or less in this order, and most preferably less than 30 mol%.

Preferably, the percentage of vinyl alcohol units in the ethylene vinyl acetal resin of the present invention is from 24 to 71 mol% based on the total monomer unit constituting the resin.

A high melting point or softening range of the material is disadvantageous, e.g. in 3D printing, because the material has to melt or soften in the heating block and the nozzle of the 3D printer. These high temperatures can lead to a substantial degradation of the material used for 3D printing. It has now been surprisingly found that the ethylene vinyl acetal used in the inventive process has a melting temperature (Tm) which allows a processing temperature of 90 ºC to 180 ºC, preferably 110 to 150 ºC, and more preferably of 120 to 140 ºC, which is substantially lower than that of comparable material. Furthermore, the ethylene vinyl acetal used in the inventive process is partially crystalline and thus, shows an increased heat resistance.

In other words, the ethylene vinyl acetal used in the inventive process allows for a lower process temperature while at the same time yielding objects which keep their shapes even at elevated temperatures.

Furthermore, the partial crystallinity of the ethylene vinyl acetals allows the usage of reinforcing fibre materials, which further improve the dimensional stability and heat resistance of the polymer, especially in the temperature range between Tg and Tm. The size of such fibre materials include the range of nano-, micro- and millimetre fibres. Examples of such reinforcing fibre materials include glass fibres, carbon fibres, aramid fibres, basalt fibres and fibres made of renewable resources (wood fibres, hemp fibres and the like). Also the combination of different fibre materials and different fibre sizes is possible.

The ethylene vinyl acetal can be supplied to the inventive process in various forms depending on the manufacturing technique used, e.g. as filaments for fused filament fabrication or as powders for bed fusion techniques. Preferably, the ethylene vinyl acetal is supplied to the manufacturing process in form of a filament, granules, pellets, beads or a powder, more preferably in form of a filament.

Preferably, the ethylene vinyl acetals used in the inventive process have a glass transition temperature (Tg) of equal to or higher than 30, 35, 40, 45, or 50ºC. Also preferably, they have a Tg of 90, 75, 70, 65, 60, 55 ºC. More preferably, the ethylene vinyl acetals used in the inventive process have a Tg of 30 to 90 ºC, most preferably of 40 to 55 ºC.

The glass transition temperature is determined by means of differential scanning calorimetry (DSC) in accordance with DIN 53765 using a heating rate of 10K/min at a temperature interval of minus 50 °C to 150 °C. A first heating ramp, followed by a cooling ramp, followed by a second heating ramp was used. The position of the glass transition temperature was established on the measurement curve associated with the second heating ramp in accordance with DIN 51007. The DIN midpoint (Tg DIN) was defined as the point of intersection of a horizontal line at half step height with the measurement curve. The step height was defined by the vertical distance of the two points of intersection of the middle tangent with the base lines of the measurement curve before and after glass transition.

The melting point (melt temperature, Tm) is determined by means of differential scanning calorimetry (DSC) in accordance with ISO 11357-3:2018.

The vinyl alcohol content and vinyl acetate content of ethylene vinyl acetals were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240 and the ethylene needed to make one hundred. The degree of acetalisation is calculated from the amount of vinyl acetal content divided by the sum of vinyl alcohol content, vinyl acetal content and vinyl acetate content. Conversion from % by weight into mol % is achieved by formulas known to the person skilled in the art.

The ethylene content of the ethylene vinyl acetate copolymer is measured by NMR spectroscopy. First, the ethylene vinyl acetal resin is dissolved in ethanol and a 2 N hydrochloride hydroxylamine solution and hydrochloric acid are added, and the mixture is stirred under reflux with a condenser in a water bath for 4 hours, and after cooling, ammonia water is added. Afterwards, methanol is added and the polymer is precipitated, washed and dried to obtain the acetylated ethylene vinyl alcohol copolymer. Then, the acetylated ethylene vinyl alcohol copolymer is dissolved in DMSO (dimethyl sulfoxide) at 120 °C, cooled to room temperature, and then N,N-dimethyl-4-aminopyridine and acetic anhydride are added thereto, followed by stirring for 1 h, followed by precipitation with ion-exchanged water and acetone, and drying to obtain an ethylene vinyl acetate copolymer. The polymer is dissolved in DMSO-d6 and measured by a proton NMR spectrometer of 400 MHz. The spectrum obtained was integrated 256 times. The molar ratio of the ethylene unist of the ethylene vinyl alcohol copolymer is calculated from the intensity ratio of the methine proton (peak of 1.1 to 1.9 ppm) derived from the ethylene unit and the vinyl acetate unit, and the terminal methyl proton (peak of 2.0ppm) derived from the vinyl acetate unit. Note that, since the ethylene unit is not affected by the acetalization reaction, the molar ratio (n) of the ethylene unit of the ethylene vinyl alcohol copolymer before the acetalization reaction is equal to the molar ratio (n) of the ethylene unit of the ethylene vinyl acetal resin obtained after the acetalization reaction.

During the printing process the polymer is heated up and molten at temperatures at slightly above the melting point of the polymer. Previously absorbed water will evaporate during melting and can cause flaws in the printed object e.g. bubbles, voids and surface defects. It has surprisingly been found the ethylene vinyl acetals used in the present invention can have an advantageous water absorption profile as well as an improved total water content in equilibrium. Accordingly, the content of water in the ethylene vinyl acetals used in the inventive process can be equal to or less than 2.5% by weight, more preferably equal to or less than 1% by weight as determined in accordance with DIN 53189.

Optionally, the material used for the inventive process comprises, other than the ethylene vinyl acetal, up to 20% by weight (based on the total weight of the composition) of one or more plasticizers. Any compound known to plasticize ethylene vinyl acetals may be used. Preferred plasticisers are diesters of aliphatic diols, in particular of aliphatic polyether diols and/or polyether polyols with aliphatic carboxylic acids, preferably diesters of polyalkylene oxides, in particular diesters of diethylene glycol, triethylene glycol and tetraethylene glycol with aliphatic (C6-C10) carboxylic acids, preferably 2-ethyl butyric acid and n-heptanoic acid, also diesters of aliphatic or aromatic (C2-C18) dicarboxylic acids, preferably adipine, sebacine and phthalic acid, with aliphatic (C4-C12) alcohols, preferably dihexyl adipate, phthalates, trimellitates, phosphates, fatty acid esters, in particular triethylene glycol-bis-(2-ethyl butyrate), triethylene glycol ethyl hexanoate (3G8), aromatic carboxylic acid esters, in particular dibenzoates and/or hydroxycarboxylic acid esters.

Also optionally, the material used for the inventive process comprises other components than the ethylene vinyl acetals as described above. For example, it may contain UV absorbers, antioxidants, optical brighteners, stabilisers, dyes, pigments, processing aids, organic or inorganic nanoparticles, pyrogenic silicic acid, surface-active substances and/or rheological modifiers.

The material used for the inventive process can also comprise other polymers different from the ethylene vinyl acetals described above. It can comprise one or more other ethylene vinyl acetal grades, differing in hydroxyl content and/or degree of polymerization and/or degree of acetate content and/or type of acetal. Alternatively, it can also comprise any polymer selected from the group consisting of polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), wood filled composites, metal filled composites, carbon fiber filled composites, thermoplastic elastomers (TPE), thermoplastic polyurethanes (TPU), polyolefins, polypropylenes (PP), acrylonitrile styrene acrylate (ASA), polyacrylates, polymethacrylates, polyvinyl alcohols (PVA) and mixtures thereof.

In case the material used in the inventive process comprises other components than the ethylene vinyl acetal, the material to be printed can be compounded by a process known to the skilled person, e.g. using an extruder. In case filaments are used for the 3D printing process, they can be prepared by processes known to the skilled person, e.g. by extrusion in a twin screw extruder from a powder or from pre-formed pellets in a single screw extruder.

Alternatively, compounding and filament extrusion can be achieved in one step, e.g. on a DSM Xplore micro compounder MC 15.

Due to the process of subsequently depositing drops of the thermoplastic polymer, certain structures like hollow sections or arches cannot be manufactured directly from the thermoplastic polymer. In such cases, a support structure is printed in a first step on which the final object is printed as a second step. The support structure is prepared from a thermoplastic polymer which can be removed later without destroying the printed object, e.g. by dissolution. Polyvinyl alcohol can be used as support structure since it can be easily removed from the final printed structure by dissolving in water.

It has now been surprisingly found that the ethylene vinyl acetals as described above show an improved compatibility with the common support materials, especially with polyvinyl alcohol (PVOH). Accordingly, the process according to the invention further comprises
- a step of depositing and solidifying a molten thermoplastic polymer different from the ethylene vinyl acetal to form a support structure,
- depositing and solidifying the molten ethylene vinyl acetal onto the support structure to form a three-dimensional preform, and
- dissolving the support structure to form the three-dimensional object.

More preferably, the thermoplastic polymer support structure comprises polyvinyl alcohol (PVOH).

Another aspect of the present invention is the use of a ethylene vinyl acetal for the manufacture of a three-dimensional object comprising, consisting of or consisting essentially of an ethylene vinyl acetal using additive manufacturing, especially for 3D printing.

Yet another aspect of the present invention is a filament for use in 3D printing comprising, consisting essentially of or consisting of a ethylene vinyl acetal.

A last aspect of the present invention is a three-dimensional object obtained according to the inventive process comprising, consisting of or consisting essentially of an ethylene vinyl acetal.

### Examples

### Filament production

The ethylene vinyl acetal resin is pelletized using a twin screw extruder for extrusion of strands cooled in a water bath and cut to pellets by means of a strand cutter. The pellets are dried at 30 ºC in a vacuum oven. A filament with a diameter of 1.75 mm is extruded using a Dr. Collin 30 mm single screw extruder with a 2 mm single hole die from these ethylene vinyl acetal pellets. The filaments were air cooled and wound onto a plastic spool. The spools were kept in a an desiccator until use for 3D printing.

### 3D printing and adhesion test

The specimens of Type 1A according to DIN EN ISO 527-2 are printed on a Felix Pro 2 3D printer using a nozzle with a diameter of 0.4 mm and the filaments extruded from the ethylene vinyl acetal material as described above at ambient outside temperature. The printing temperature is set to 230 °C. The printing speed is set to 10 mm/s for the first layer and 25 mm/s for further layers. The printing layer thickness is set to 200 µm. The build plate temperature is set to 70°C. The specimens are printed laying flat in the x-y-plane on the build plate and consist of 20 x 200 µm layers of ethylene vinyl acetal to achieve a total thickness of 4 mm. The structure of the printed sample consists of a 0.8 mm outer wall and an inner structure with 100% infill, which is printed in an alignment of 45° with regard to the wall. Upon completion of one print layer, the next following layer has an alignment which is flipped by 90° compared to the previous layer.

The tensile properties of these specimens are measured according to DIN EN ISO 527-1.

### Example 1 - ethylene vinyl acetal

100 parts by weight of the ethylene vinyl alcohol copolymer synthesized according to the process described in Japanese Patent Application Laid-Open No. 2016-28139 were dispersed in 315 parts by weight of 1-propanol containing 44 mol% of ethylene units (saponification degree: 99%) and the temperature of the solution was raised to 60 °C with agitation. Afterwards, 40 parts by weight of 1 M hydrochloric acid was added, followed by 16.7 parts by weight of n-butyraldehyde while maintaining the temperature at 60 °C. As the reaction proceeded, the ethylene vinyl alcohol copolymer dissolved and the reaction mixture became a homogeneous solution. After 36 hours, 6.4 parts by weight of sodium hydrogen carbonate was added to stop the reaction. After adding 500 parts by weight of 1-propanol to the reaction solution to make it uniform, it was added dropwise to 2000 parts by weight of water to precipitate a resin. Thereafter, the operation of filtration and washing with water was repeated three times, the resulting solid was vacuum dried at 60 °C for 8 hours. The ethylene vinyl acetal thus obtained has a content of ethylene units of 44 mol% and an acetalization degree of 31 mol% and is subsequently used to prepare a filament as described above. The filament thus produced is used in the 3D printing process as described above. The engineering strain is measured on the resulting specimen.

### Comparative Example 1 - n-butyl acetal

Mowital^{®} polyvinyl acetal resin B60H obtained from Kuraray Europe GmbH, which contains acetal units prepared only with n-butyraldehyd, is used to prepare a filament as described above. The filament thus produced is used in the 3D printing process as described above. The engineering strain is measured on the resulting specimen.

## Claims

1. A process for the additive manufacturing of a three-dimensional object wherein the three-dimensional object comprises, consists of or consists essentially of an ethylene vinyl acetal.

2. The process according to claim 1 wherein the additive manufacturing is 3D printing.

3. The process according to claim 1 or 2 wherein the acetal group has 1 to 7 carbon atoms.

4. The process according to any one of claims 1 to 3 wherein the acetal group is derived from n-butyraldehyde and/or iso-butyraldehyde acetal.

5. The process according to any one of claims 1 to 4 wherein the ethylene vinyl acetal is supplied to the manufacturing process in form of a filament, granules, beads, pellets or a powder.

6. The process according to any one of claims 1 to 5 wherein the ethylene vinyl acetal has a glass transition temperature (Tg) of 30 to 75 ºC.

7. The process according to any one of claims 1 to 6 wherein the ethylene vinyl acetal has a melting temperature (Tm) of 90 to 180 ºC.

8. The process according to any one of claims 1 to 7 wherein the ethylene vinyl acetal has a degree of acetalisation of 5 to 40 mol%.

9. The process according to any one of claims 1 to 8 wherein the ethylene vinyl acetal comprises ethylene units in the range of 25 to 60 mol%.

10. The process according to any one of claims 1 to 9 comprising
- a step of depositing and solidifying a molten thermoplastic polymer different from the ethylene vinyl acetal to form a support structure,
- depositing and solidifying the molten ethylene vinyl acetal onto the support structure to form a three-dimensional preform, and subsequently
- dissolving the support structure to form the three-dimensional object.

11. The process according to claim 10 wherein the thermoplastic polymer support structure comprises polyvinyl alcohol (PVOH).

12. Use of an ethylene vinyl acetal for the manufacture of a three-dimensional object comprising, consisting of or consisting essentially of an ethylene vinyl acetal using additive manufacturing.

13. The use of claim 12 wherein the additive manufacturing is 3D printing.

14. A filament for use in 3D printing comprising, consisting essentially of or consisting of an ethylene vinyl acetal.

15. A three-dimensional object obtained according to the process of any one of claims 1 to 11 comprising, consisting of or consisting essentially of an ethylene vinyl acetal.
